## Europäisches Patentamt
## European Patent Office
## Office européen des brevets

(19)

(11) Veröffentlichungsnummer: **0 1 1 7 272**
**B1**

(12) **EUROPÄISCHE PATENTSCHRIFT**

(45) Veröffentlichungstag der Patentschrift:
14.05.86

(21) Anmeldenummer: 83103034.1

(22) Anmeldetag: 26.03.83

(51) Int. Cl.⁴: **B 29 C 43/20,** D 06 N 7/00,
B 32 B 25/04

(54) Verfahren zur Herstellung eines hellfarbigen, elastischen und elektrisch leitfähigen Bodenbelages.

(30) Priorität: 11.10.82 DE 3237633

(43) Veröffentlichungstag der Anmeldung:
05.09.84 Patentblatt 84/36

(45) Bekanntmachung des Hinweises auf die Patenterteilung:
14.05.86 Patentblatt 86/20

(84) Benannte Vertragsstaaten:
AT BE CH DE FR GB IT LI LU NL SE

(56) Entgegenhaltungen:
DE - A - 1 928 405
DE - A - 2 824 739
DE - A - 2 836 642
DE - B - 1 008 473
GB - A - 470 378
GB - A - 1 117 430
US - A - 2 323 461
US - A - 2 915 785

(73) Patentinhaber: Firma Carl Freudenberg, Höhnerweg 4,
D-6940 Weinheim/Bergstrasse (DE)

(72) Erfinder: Heckel, Klaus, Dr., Akazienweg 26,
D-6940 Weinheim (DE)
Erfinder: Graab, Gerhard, Dr., Laurentiusstrasse 7,
D-6800 Mannheim (DE)
Erfinder: Kühl, Hans-Michael, Tilsiter Strasse 34,
D-6944 Hemsbach (DE)

(74) Vertreter: Weissenfeld-Richters, Helga, Dr.,
Höhnerweg 2, D-6940 Weinheim/Bergstrasse (DE)

ACTORUM AG

## Beschreibung

Die Erfindung betrifft ein Verfahren zur Herstellung eines hellfarbigen, elastischen und elektrisch leitfähigen Bodenbelages, insbesondere für Operationssäle und explosionsgefährdete Räume, bei dem eine 3 bis 80 Gew.% Russ und/oder Graphit enthaltende Unterschicht aus unvulkanisiertem Gummi mit einer anbindbaren Oberschicht verpresst und vulkanisiert wird, die maximal 0,5 Gew.% Russ und/oder Graphit enthält.

Ein Verfahren dieser Art ist aus US-PS 30 40 210 bekannt. Die miteinander verpressten Schichten bestehen dabei aus unvulkanisiertem Gummi. Sie treten während des Verpressens in eine feste gegenseitige Verbindung, die nach der anschliessenden Vulkanisation formstabil ist.

Die obere der beiden Schichten besteht aus einer elektrisch nicht leitenden Zusammensetzung, in welche elektrisch leitende Partikel einer im übrigen gleichen Zusammensetzung eingestreut sind. Die Partikel berühren einander und die elektrisch leitfähige Unterschicht, über die die Oberfläche des fertigen Fussbodenbelages erreichende, elektrische Spannungen abgeleitet werden.

Die Mindestleitfähigkeit, die beispielsweise in bezug auf eine Verwendung in explosionsgefährdeten Räumen oder Operationssälen vorgeschrieben ist, lässt sich bei einer entsprechenden Herstellungsmethode nur dann gewährleisten, wenn ein grosser Anteil der oberen der beiden Schichten aus elektrisch leitfähigen Partikeln besteht, weil diese zu einem hohen Anteil während der plastische Verformungen einschliessenden Herstellung von nicht leitfähigen Werkstoffbestandteilen umhüllt und dadurch in elektrischer Hinsicht neutralisiert werden.

Die elektrische Leitfähigkeit einer Gummimischung lässt sich unter wirtschaftlichen Gesichtspunkten nur durch eine Zumischung von Russ oder Graphit beeinflussen, und damit von Zuschlagstoffen, die zugleich eine schwarze Einfärbung des Werkstoffes bedingen. Der Vermehrung der elektrisch leitfähigen Partikel in der Oberschicht sind aus diesem Grunde Grenzen gesetzt. Durch eine Zugabe von metallischen Pulvern lässt sich die Leitfähigkeit zwar ebenfalls erhöhen, der in diesem Falle benötigte Gehalt liegt aber derart hoch, dass die Elastizität des Fussbodenbelags stark beeinträchtigt wird und derjenigen keramischer Bodenbeläge ähnlich ist. Eine derartige Härte ist aus orthopädischen Gründen nicht erwünscht.

Bei der Vulkanisation von Gummi ergibt sich ausserdem unmittelbar vor dem Einsetzen des Vernetzungsvorgangs eine Verflüssigung der eingesetzten Masse, die eine gegenseitige Vermischung vonaneinander angrenzenden, verschiedenfarbigen Bestandteilen begünstigt. Die Konturen des in die Oberschicht eingebetteten, elektrisch leitfähigen Granulates erfahren hierdurch eine unschön wirkende Aufweichung, und es ergeben sich auch sonst Verschiebungen, die in geschmacklicher Hinsicht wenig befriedigend sind.

Der Erfindung liegt die Aufgabe zugrunde, ein Verfahren der eingangs genannten Art derart weiter zu entwickeln, dass die angesprochenen Nachteile vermieden werden. Das Verfahren soll es bei guter Wirtschaftlichkeit insbesondere ermöglichen, einen hellfarbigen oder bunten Fussbodenbelag mit definierter elektrischer Mindestleitfähigkeit aus einem polymeren Werkstoff herzustellen, der eine klar strukturierte Oberflächenmusterung aufweist, in der schwarz eingefärbte Zonen nicht störend in Erscheinung treten. Die reliefartige Struktur und die farbliche Musterung der Oberfläche sollen voneinander unabhängig und in weitem Rahmen variierbar sein. Daneben soll es das vorgeschlagene Verfahren ermöglichen, auf der Oberfläche eine Press- bzw. Vulkanisationshaut zu erzeugen, die aus verschiedenfarbigen, polymeren Werkstoffen bestehende Bereiche unabhängig von der jeweiligen farblichen Musterung als kontinuierlich ausgebildete Schicht abschliesst.

Diese Aufgabe wird erfindungsgemass mit den kennzeichnenden Merkmalen des Patentanspruchs 1 gelöst.

Bei dem vorgeschlagenen Verfahren wird die Oberschicht aus einem beliebigen Werkstoff hergestellt, der unter den Bedingungen des Verpressens mit der Unterschicht eine höhere Fliessviskosität aufweist als diese, und der seiner Art nach geeignet ist, eine feste Bindung mit dem Werkstoff der Unterschicht einzugehen. Die Oberschicht kann beispielsweise aus Holz, Textil, einem unvernetzten Gummi oder Kunststoff bestehen. Sofern unter den thermischen Bedingungen des Verpressens eine Erweichung eintritt, ist lediglich zu beachten, dass die Fliessviskosität grösser ist als die Fliessviskosität des gleichzeitig erweichenden Werkstoffes der Unterschicht. Hierdurch wird eine gute Konturenschärfe zwischen den verschiedenfarbigen Bereichen erhalten. Die angesprochene Fliessviskosität wird bei gummielastischen Werkstoffen als mooney-Viskosität bezeichnet.

Eine entsprechende Abstimmung der Fliessviskosität lässt sich durch Auswahl entsprechend verschiedener Werkstoffe für die Unter- und die Oberschicht erzielen. Die Unterschicht kann beispielsweise aus einem gummielastischen Werkstoff bestehen, die Oberschicht aus einem thermoplastischen Werkstoff. Besonders geeignet sind Polyester und Polyamid, wobei sowohl Folien als auch Gewebe, Gewirke oder Vliesstoffe zur Anwendung gelangen können. Es ist im Einzelfalle lediglich zu prüfen, ob eine ausreichend stabile Haftung erzielbar ist, und diese wird sich gegebenenfalls verbessern durch Einbringung einer Schicht aus einem Haftvermittler, beispielsweise aus einem Polyurethankleber, einem Polychloroprenkleber, einem Resorcin-Formaldehyd-Latex oder einer Chlor-Kautschuk-Lösung. Bei offenmaschigen Schichten, beispielsweise einem Gewebe oder einem Vliesstoff, verhindert eine derartige Schicht zugleich das Eindringen des während der Vulkanisation erweichenden, gummielastischen Werkstoffes in die Poren der Oberschicht.

Sofern die Unter- und die Oberschicht aus artverwandten Werkstoffen hergestellt werden sollen, beispielsweise aus einem gummielastischen Werkstoff, lässt sich eine Erhöhung der Fliessviskosität unter den Bedingungen des Verpressens in der Oberschicht erzielen durch Einmischung eines relativ grösseren Gehaltes eines mineralischen Füllstoffes. Im gleichen Sinne lässt sich die Fliessviskosität der Unterschicht vermindern durch Verwendung bzw. durch Einmischung eines copolymeren Werkstoffes mit besonders niedriger Fliessviskosität bzw. durch Verwendung eines andersartigen, speziellen Vulkanisermittels. Es ist auch möglich, die Ober- und die Unterschicht aus identischen gummielastischen Werkstoffen herzustellen, wenn die Oberschicht anvulkanisiert und dadurch an einem synchronen Erweichen während des gemeinsamen Verpressens mit der Unterschicht gehindert wird.

Die aus einem in der vorstehend beschriebenen Weise an den Werkstoff der Unterschicht angepasste Oberschicht wird mit regelmässig und/oder unregelmässig verteilten Durchbrechungen versehen, die bei einem Durchmesser von mindestens 1 mm so verteilt sind, dass der kleinste Abstand zweier Durchbrechungen nicht weniger als 2 mm und nicht mehr als 40 mm beträgt, mit der Massgabe, dass die Gesamtüberdeckung der Oberfläche 40%, vorzugsweise 20% nicht übersteigt.

Die als Durchbrechungen ausgebildeten Aussparungen der Oberschicht können auf jede beliebige Weise angebracht werden, beispielsweise durch Stanzen, Schneiden oder Bohren. Dabei ist im Hinblick auf eine gute Konrurenschärfe der farblichen Musterung grösster Wert darauf zu legen, dass die bei einer solchen mechanischen Bearbeitung entstehenden Grate und andere lose Bestandteile sorgfältig entfernt werden. Zweckmässigerweise wird die Oberschicht ausserdem so auf die Unterschicht aufgelegt, das die Gratseite dieser zugewandt ist. Nicht erkannte Restbestandteile von Graten haben hierdurch einen grösseren Abstand von der eigentlichen Nutzfläche, und sie sind dadurch im fertigen Bodenbelag nicht unmittelbar sichtbar.

Die Begrenzungsflächen der Aussparungen sind den Deckflächen der Oberschicht senkrecht zugeordnet, um eine Veränderung des farblichen Gesamteindruckes nach eingetretenem Verschleiss auszuschliessen. Die Umrisse der Aussparungen sind als solche frei wählbar, und können jede beliebige Gestalt haben, soweit nicht die Eigenfestigkeit der Oberschicht beeinträchtigt wird. Neben runden und polygonförmigen Profilen kommen jedoch bevorzugt Piktogramme zur Anwendung, die Werbe- oder Hinweischarakter haben können. Durch ihre Anwendung lassen sich beispielsweise die verschiedenen Abteilungen eines Kaufhauses oder Wege und Verkehrsflächen dauerhaft und einprägsam kennzeichnen.

Die Aussparungen sind einander mosaikartig zugeordnet und können im Zusammenhang Piktogramme, Buchstaben, Zahlen, Linienzüge und/ oder der Information und/oder Erbauung dienende graphische Darstellungen zeigen. Die einzelne Aussparung hat nur eine geringe Ausdehnung von vorzugsweise 1 bis 5 mm, und sie kann den benachbarten Aussparungen in einem ähnlich kleinen Abstand zugeordnet werden. Eine Auflösung des so gebildeten Musters ist daher bei normalem Sichtabstand und mit unbewehrtem Auge regulär nicht möglich, was unter ästhetischen Gesichtspunkten von grossem Vorteil ist.

Die in den Aussparungen sichtbare Farbe der schwarzen Unterschicht dominiert in dem Masse, in dem der Überdeckungsgrad, bezogen auf die Gesamtfläche, steigt. Ein Überdeckungsgrad von 0,05% ist jedoch bereits ausreichend in bezug auf die Gewährleistung der nach DIN 51593 für explosionsgefährdete Räume vorgeschriebenen Ableitfähigkeit für elektrostatische Ladungen. Der Anteil schwarz eingefärber Flächenbereiche an der Oberfläche eines hellfarbigen Bodenbelages ist in diesem Falle so gering, dass der farbliche Gesamteindruck demjenigen der hellen Grundfarbe ausserordentlich nahekommt. Diese wird in ihrer Nuancierung zusätzlich betont durch die messerscharfe Abgrenzung zu den schwarz abgegrenzten Bereichen, die einander vorzugsweise entsprechend einer kontinuierlichen Musterung zugeordnet sind.

In bezug auf die Erzielung geschmacklicher Akzente ist es vorteilhaft, in bildlichen Darstellungen Aussparungen in gleichbleibenden Abständen anzubringen und diesen eine stetige und/oder sich sprunghaft verändernde Grösse zu verleihen bzw. bei gleichbleibender Grösse die Abstände sprunghaft und/oder stetig zu verändern. Auch eine sprunghafte und/oder stetige Veränderung der Gestalt der Grundfläche einer jeden Aussparung kann diesem Zwecke dienlich sein, beispielsweise der unmerkliche Übergang von einer quadratischen zu einer rechteckigen Grundform. Eine Belebung der an sich zweifarbigen Oberfläche durch Licht- und Schattenwirkungen ist die Folge.

Die Oberschicht hat angesichts der geringen Ausdehnung der einzelnen Aussparungen eine gute Eigenstabilität. Auch bei grossformatigen Darstellungen ist deshalb eine Verzerrung oder eine Beschädigung der Oberschicht während ihrer Manipulierung beim Verpressen nicht zu befürchten. Die im einzelnen gewählte Darstellung kann damit nahezu jeden beliebigen Flächenanteil des Fussbodenbelages überdecken und in nahezu beliebiger Weise variiert werden.

Die untere Schicht besteht aus einem unter den Bedingungen des Verpressens plastisch formbaren, polymeren Werkstoff, beispielsweise aus unvernetztem Gummi oder vulkanisierbarem Kunststoff, die so zusammengesetzt und bemessen ist, dass der elektrische Widerstand einer Fläche von 20 cm$^2$ in senkrechter Richtung nach dem Verpressen höchstens $10^4 \Omega$ beträgt. Die Dicke der Unterschicht soll wenigstens derjenigen der Oberschicht entsprechen, wobei die elektrische Leitfähigkeit auf einem Gehalt an Russ und/oder Graphit von wenigstens 10 Gew.% beruht. Eine dickere Ausführung ergibt eine allgemeine Aussteifung des erhaltenen Fussbodenbelages, was sich vorteilhaft auf die Montage auswirkt.

Ober- und Unterschicht werden aufeinandergelegt, und in einem Formwerkzeug derart miteinander verpresst, dass die Unterschicht die Aussparungen der Oberschicht vollständig ausfüllt. Die Temperatursteuerung wird dabei so vorgenommen, dass sich die gewünschte gegenseitige Verbindung und Verfestigung der Werkstoffe beider Schichten ergibt. Das bedeutet, dass bei Verwendung vulkanisierbarer Substanzen im allgemeinen eine einfache Beheizung auf Vulkanisationstemperatur genügt. Diese kann in Abhängigkeit vom jeweils eingesetzten Werkstoff in sehr weiten Grenzen variieren und beträgt bevorzugt 150 bis 190° C. Eine kontinuierliche Arbeitsweise mit einem Bandkalander ist ebenfalls möglich.

Die senkrecht gegeneinander gepressten Platten des Formwerkzeuges können glatt und ebenflächig ausgebildet sein, was zur Erzeugung eines Fussbodenbelages führt, dessen Ober- und Unterseite vollkommen glatt und ebenflächig ist. Solche Bodenbeläge zeichnen sich durch eine besonders grosse Widerstandsfähigkeit gegenüber mechanischen Belastungen aus. Durch Verwendung einer oberen Pressplatte mit einer reliefartigen Strukturierung lässt sich die Rutschsicherheit des erzeugten Fussbodenbelages verbessern, was häufig erwünscht ist bzw. notwendig für eine Verlegung im Nassbereich. Durch eine entsprechend erzeugte Struturierung der Unterseite lässt sich die Sicherheit der Verankerung nach der Verlegung verbessern. Wenn das hier gebildete Relief aus einer Vielzahl von dicht nebeneinanderliegenden Säulen gebildet wird, ergibt sich ausserdem eine Verbesserung der Trittelastizität und der Trittschalldämpfung bei Verwendung einer Unterschicht aus einem gummielastischen Werkstoff. Nachfolgend wird der Gegenstand der vorliegenden Erfindung anhand eines Beispieles weiter verdeutlicht:

*Beispiel 1:*

Eine Gummimischung, bestehend aus der Rezeptur A wird in einem Innenmischer homogenisiert. Die Mischung wird anschliessend auf einen Kalander gegeben, und zu einer Folie mit einer Dicke von 0,5 bis 1 mm ausgewalzt. Die Folie wird aufgewickelt und anschliessend in einen Bandkalander überführt, in dem sie bei einer Oberflächentemperatur von 180° C und einer Laufgeschwindigkeit von 80 m/h, d.h. einer Verweilzeit von ca. 3 Minuten vorvulkanisiert wird.

In den Innenmischer werden die Komponenten der Rezeptur I eingegeben und nach vollständiger Homogenisierung der Mischung zu einer Folie mit einer Dicke von 1,5 bis 2 mm ausgewalzt.

Die Folie der Zusammensetzung A wird in einem Rollenstandwerkzeug mit sie ganz durchdringenden Aussparungen versehen. Diese sind zylindrisch begrenzt und haben bei einem gleichbleibenden Abstand in Längs- und Querrichtung von 20 mm einen Durchmesser von 1,8 mm. Die Aussparungen bilden in ihrer Gesamtheit ein Mosaik, das an ein Kachelmuster erinnert. Die Folie bildet im Sinne des vorgeschlagenen Verfahrens die Oberschicht. Sie ist derart eigenfest, dass sie ohne die Gefahr einer Beschädigung oder der Verzerrung des aus Aussparungen gebildeten Musters manipuliert werden kann.

Die zwei vorliegenden Folien werden anschliessend aufeinander geschichtet und in einen beheizten Kalander überführt. Die mit den Durchbrechungen versehene Folie ist der polierten Kalanderwalze zugewandt. Diese hat bei einer Oberflächentemperatur von 180° C eine Laufgeschwindigkeit von 36 m/h, was einer Verweildauer des dreischichtigen Gebildes von 6 Minuten entspricht. Die drei Schichten werden während dieser Zeit vulkanisiert und untrennbar miteinander verbunden. Die Oberfläche zeichnet sich durch eine durchgehende, kontinuierliche Vulkanisationshaut aus, die lediglich farblich durch den in die Aussparungen eingepressten Werkstoff der Unterschicht unterbrochen ist. Ein gleichwertiges Ergebnis lässt sich erzielen, wenn anstelle der polierten Kalanderwalze eine solche verwendet wird, die eine waffelartig strukturierte Oberfläche aufweist oder ein entsprechendes Pressenwerkzeug.

|  | A | I |
|---|---|---|
| SBR-Kautschuk | 15 % | 11,8 % |
| Hochstyrolharz (65% Blockstyrol) | 2,4 % | 5,6 % |
| Kaolin | 60 % | |
| Russ N770 | | 61,5 % |
| Kreide | 8,5 % | 14,9 % |
| Weichmacher | 1,7 % | 3,35% |
| TiO$_2$ | 2,5 % | |
| Lithopone | 6,7 % | |
| ZnO | 0,7 % | 0,7 % |
| Stearinsäure | 0,35% | 0,35% |
| Triäthanolamin | 0,35% | |
| Paraffin | 0,35% | 0,35% |
| Alterungsschutzmittel | 0,2 % | 0,2 % |
| 2-Mercaptobenzothiazol | 0,2 % | 0,2 % |
| Dibenzothiazyldisulfid | 0,2 % | 0,2 % |
| Schwefel | 0,85% | 0,85% |
| | 100,00% | 100,00% |

Angaben in Prozent, bezogen auf das Gesamtgewicht der Mischung.

*Beispiel 2:*

Ein Vergleichsmuster der Folie aus der Mischung I wird entsprechend den Angaben aus dem Beispiel 1 gelocht und auf die Oberseite der anvulkanisierten Folie aus der Mischung A aufgelegt. Die übrige Verfahrensweise entspricht der in Beispiel 1 geschilderten. Aufgrund der Viskositätsunterschiede bei 170° C ergeben sich keine sauberen Oberflächen, d.h. die schlechter fleissende Mischung A füllt die durch Stanzen in der Oberschicht eingebrachten Öffnungen nicht aus, die Konturen der Aussparungen sind unsauber ausgebildet.

*Beispiel 3:*

Bei einem Muster gemäss Beispiel 1 wird die Oberschicht durch ein entsprechend gelochtes Gewebe aus Polyesterfasern ersetzt. Dieses hat bei einer Dicke von 2,4 mm ein Flächengewicht von 350 g/m² und ist rückseitig mit einer Schicht aus einem Resorcin-Formaldehyd-Latex versehen, um die Poren zu verschliessen und eine gute Haftung zu dem gummielastischen Werkstoff der Mittelschicht zu gewährleisten. Die übrigen Schichten, die gegenseitige Zuordnung und die Bedingungen der gemeinsamen Verpressung entsprechen den Angaben aus dem Beispiel 1. Der erhaltene Fussbodenbelag zeichnet sich aufgrund seiner textilen Oberflächenzonen durch ein ansprechendes Aussehen und eine gute Wärme- und Trittschalldämmung aus. Er ist mit Einkaufswagen gut befahrbar und besonders widerstandsfähig gegen grosse statische und dynamische Belastungen.

## Patentanspruch

Verfahren zur Herstellung eines hellfarbigen, elastischen und elektrisch leitfähigen Bodenbelages, insbesondere für Operationssäle und explosionsgefährdete Räume, bei dem eine 3 bis 80 Gew.% Russ und/oder Graphit enthaltende Unterschicht aus unvulkanisiertem Gummi oder vulkanisierbarem Kunststoff mit einer anbindbaren Oberschicht verpresst und vulkanisiert wird, die maximal 0,5 Gew.% Russ und/oder Graphit enthält, dadurch gekennzeichnet, dass die Oberschicht aus einem Werkstoff hergestellt wird, der unter den Bedingungen des Verpressens und der Vulkanisation eine höhere Fliessviskosität aufweist als der Werkstoff der Unterschicht, dass die Oberschicht mit regelmässig und/oder unregelmässig verteilten Durchbrechungen versehen wird, die bei einem Durchmesser von mindestens 1 mm so verteilt werden, dass der kleinste Abstand nicht weniger als 2 mm und nicht mehr als 40 mm beträgt, mit der Massgabe, dass die Gesamtoberfläche der Durchbrechungen 40% nicht überschreitet und dass das Verpressen so vorgenommen wird, dass der Werkstoff der Unterschicht die Aussparungen der Oberschicht bis zur Oberfläche ausfüllt.

## Revendication

Procédé de fabrication d'un revêtement de sol de couleur claire, élastique et conducteur de l'électricité, en particulier, pour des salles d'opérations et des espaces à risque d'explosion, procédé dans lequel on presse et vulcanise une couche inférieure en caoutchouc non vulcanisé ou en matière synthétique vulcanisable contenant 3 à 80% en poids de noir de fumée et/ou de graphite avec une couche supérieure pouvant être attachée et contenant, au maximum, 0,5% en poids de noir de fumée et/ou de graphite, caractérisé en ce qu'on fabrique la couche supérieure à partir d'une matière première qui, dans les conditions du pressage et de la vulcanisation, a une viscosité à l'écoulement supérieure à celle de la matière première de la couche inférieure, en ce que la couche supérieure est pourvue de découpes réparties régulièrement et/ou irrégulièrement et qui, avec un diamètre d'au moins 1 mm, sont réparties de telle sorte qu'au moins la plus faible distance ne soit pas inférieure à 2 mm et ne soit pas supérieure à 40 mm, avec cette réserve que la surface totale des découpes ne dépasse pas 40%, le pressage étant effectué de telle sorte que la matière première de la couche inférieure comble les découpes de la couche supérieure jusqu'à la surface.

## Claim

A process for the production of a light-coloured, resilient and electrically conductive floor covering, in particular for operating theatres and potentially explosive areas, in which an underlayer of unvulcanised rubber or vulcanisable plastics material, containing 3 to 80% by weight carbon black and/or graphite, is moulded and vulcanised with a bondable upper layer which contains a maximum of 0.5% by weight carbon black and/or graphite, characterized in that the upper layer is produced from a material which has a higher flow viscosity under the conditions of moulding and vulcanisation than the material of the underlayer, in that the upper layer is provided with regularly and/or irregularly distributed perforations which have a diameter of at least 1 mm and are distributed such that the smallest spacing is not less than 2 mm and not greater than 40 mm, with the proviso that the overall surface of the perforations does not exceed 40% and that the moulding is performed such that the material of the underlayer fills out the recesses of the upper layer up to the surface.